# EUROPÄISCHE PATENTSCHRIFT

(11) **EP 3 628 193 B1**
(45) Veröffentlichungstag und Bekanntmachung des Hinweises auf die Patenterteilung: **02.08.2023**
(21) Anmeldenummer: 18196681.3
(22) Anmeldetag: 25.09.2018
(51) Int. Cl.: A47J 31/44

(54) **GETRÄNKEZUBEREITUNGSVORRICHTUNG MIT STRAHLPUMPEN**
BEVERAGE PREPARATION DEVICE WITH JET EJECTORS
DISPOSITIF DE PRÉPARATION DE BOISSON AVEC POURVU DE POMPES À JET

(43) Veröffentlichungstag der Anmeldung: 01.04.2020
(73) Patentinhaber: Eugster/Frismag AG, 8580 Amriswil (CH)
(72) Erfinder: RIESSBECK, Wolfgang, 8597 Landschlacht (CH); VAN DE LÖCHT, Hendrik, 8586 Riedt bei Erlen (CH)
(74) Vertreter: Patent- und Rechtsanwälte Behrmann Wagner PartG mbB

(56) Entgegenhaltungen:
- EP-A1- 1 934 113
- WO-A1-2018/060191
- US-A1- 2016 113 436
- US-B2- 8 424 446

## Beschreibung

Die Erfindung betrifft eine Getränkezubereitungsvorrichtung gemäß dem Oberbegriff des Anspruchs 1, insbesondere in Form einer Kaffeemaschine mit einer Brüheinheit zum Auslaugen von Kaffeemehl, mit mindestens einem Mittel zum Erhitzen eines Fluides, insbesondere Milch, mit Wasserdampf, umfassend eine Heizeinrichtung zum Erhitzen von Wasser zur Bildung von Wasserdampf. Ferner betrifft die Erfindung eine Getränkezubereitungsvorrichtung gemäß dem Oberbegriff des Anspruchs 5. Außerdem betrifft die Erfindung ein Verfahren zum Betreiben einer Getränkezubereitungsvorrichtung sowie ein weiteres Verfahren zum Betreiben einer Getränkezubereitungsvorrichtung.

Bei bekannten Kaffeevollautomaten für den Hausgebrauch sind, insbesondere bei hochpreisigen Geräten, Mittel zum Erhitzen von Milch mittels Wasserdampf vorgesehen, wobei Wasserdampf durch eine sogenannte Treibdüse geleitet wird, um in der Art einer Strahlpumpe Milch durch eine Milcheinheit anzusaugen. Dabei gelangt der Wasserdampf, der zur Erzeugung des Ansaug-, d.h. Unterdruckes genutzt wird in die Milch und erhitzt diese. In der Praxis reicht die über den Dampf zugeführte Energiemenge jedoch bei gegebener Flussgeschwindigkeit lediglich dazu aus, die Milch auf etwa 40°C zu erhitzen, welches von einigen Verbrauchern für bestimmte Kaffeeprodukte, wie beispielsweise Cappuccino oder Latte Macchiato als eine zu geringe Temperatur empfunden wird, da der Milchanteil bei derartigen Getränken vergleichsweise hoch und in der Folge die resultierende Mischtemperatur mit Kaffee bei nur 40°C warmer Milch zu gering ist.

Die WO 2007/036878 A1 beschreibt Verfahren und Vorrichtungen, bei denen zur Getränkezubereitung einem Hauptstrom eines ersten Fluids zwei oder mehrere Nebenströme nit weitern Fluiden zugeführt ewrden können. Die Zusammenführung von Haupt- und Nebenfluidleitungen können dabei als Saugstrahlpumpe oder als Venturidüse ausgebildet sein.

Die US 2016/113436 A1 offenbart eine Vorrichtung zum Aufschäumen einer Flüssigkeit, insbesondere um zwei oder mehr Schaumströme parallel zu liefern.

Die US 8,424,446 B2 betrifft eine Aufschäumvorrichtung zum Aufschäumen von Milch, mit einem Dampfzufuhrkanal, der in eine Mischkammer mündet, einem Milchzufuhrkanal, der in die Mischkammer mündet und einen Luftzufuhrkanal aufweist, wobei die Mischkammer mit einer Schaumkammer in Verbindung steht. Wesentlich ist dabei, dass der Luftzufuhrkanal in die Schaumkammer mündet, so dass eine nahezu identische Abgabetemperatur von Milchschaum und Milch erreicht werden kann.

Die WO 2018/060191 A1 beschreibt ein Verfahren zur Herstellung von heißer Milch mit oder ohne Schaum mit einer Emulgiervorrichtung mit Venturi-Effekt, die geeignet ist, in eine Mischkammer einen Dampfstrom zu schicken, um durch Venturi-Effekt Milch und Luft oder nur Milch anzusaugen. Das Verfahren umfasst einen Herstellungszyklus von heißer Milch mit Schaum und einen Herstellungszyklus von heißer Milch ohne Schaum, der durch Zufuhr eines gleichen Dampfstroms gleicher Dauer in eine Mischkammer mit gleichem Volumen, gleicher Gestalt und gleichem Einlaßquerschnitt der Milch, aber unterschiedlichem Auslaßquerschnitt der Milch durchgeführt wird.

Ausgehend von dem zuvor beschriebenen Stand der Technik liegt der Erfindung die Aufgabe zugrunde, eine gattungsgemäße Getränkezubereitungsvorrichtung, insbesondere eine eine Brüheinheit zum Auslaugen von Kaffeemehl umfassende Kaffeemaschine so weiter zu bilden, dass mit dieser die Milchtemperatur und/oder Milchschaumtemperatur auf ein höheres Temperaturniveau, insbesondere im Bereich von 45°C bis 90°C, erhitzt werden kann bevorzugt die Ansaugsicherheit zu erhöhen und weiter bevorzugt ohne eine erhebliche Milchflussgeschwindigkeit hinnehmen zu müssen.

Ferner besteht die Aufgabe darin, entsprechend verbesserte Verfahren zum Betreiben einer Getränkevorrichtung anzugeben.

Diese Aufgabe wird hinsichtlich der Getränkezubereitungsvorrichtung mit den Merkmalen des Anspruchs 1. Weiterhin wird diese Aufgabe hinsichtlich des Verfahrens mit den Merkmalen des Anspruchs 8 gelöst.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Zur Vermeidung von Wiederholungen sollen vorrichtungsgemäß offenbarte Merkmale als verfahrensgemäß offenbart gelten und beanspruchbar sein. Ebenso sollen verfahrensgemäß offenbarte Merkmale als vorrichtungsgemäß offenbart gelten und ebenfalls beanspruchbar sein.

Der Erfindung liegt der Gedanke zugrunde, die Milchtemperatur dadurch auf ein höheres Temperaturniveau zu bringen und die Ansaugsicherheit zu erhöhen, dass das Mittel mindestens zwei in Reihe geschaltete, insbesondere als Einzelpumpen ausgebildete und miteinander verbundene Strahlpumpen umfasst, die jeweils eine Treibdüse zum Erzeugen von Unterdruck aufweisen, wobei das von einer ersten Treibdüse der ersten Strahlpumpe infolge Unterdruck angesaugte und mittels Wasserdampf erhitzte Fluid zusätzlich von einer weiteren Treibdüse der weiteren Strahlpumpe ansaugbar und weiter mittels Wasserdampf erhitzbar ist. Dabei arbeiten bzw. funktionieren beide Strahlpumpen nach dem Venturiprinzip.

Unter dem zu erhitzenden Fluid kann Milch, ein Milch-/Luftgemisch, Milchschaum oder Luft verstanden werden. Unter einer Strahlpumpe kann eine Strahlpumpenstufe verstanden werden. Milch, die aufgeschäumt ist, kann als Milchschaum verstanden werden.

Bei einer Reihenschaltung der Strahlpumpen sind die Strahlpumpen in Förderrichtung hin zum Produktauslass hintereinander bzw. nacheinander angeordnet.

Durch die Verwendung der Reihenschaltung der Strahlpumpen lässt sich die Ansaugsicherheit auf einfache Weise erhöhen, wobei der benötigte Unterdruck zur Milch-/Milchschaum-Ansaugung verbessert wird. Mit der zweiten vorgesehenen Strahlpumpe ist hierdurch eine zusätzliche Erwärmung des Produkts erzielbar. Damit lässt sich eine höhere Ausgabetemperatur des fertigen Produktes erreichen.

Vorzugsweise sind die Treibdüsen zum Erzeugen von Unterdruck über wenigstens eine Treibdampfleitung mit dampfförmigen oder zur Dampferzeugung vorgesehenen Mitteln (insbesondere Fluid) versorgbar. Im Rahmen der Anmeldung wird der Begriff Treibdampfleitung so verstanden, dass über diese, insbesondere gleichzeitig, ein dampfförmiges oder zur Dampferzeugung vorgesehenes Mittel gefördert wird. Dies bedeutet, dass das Mittel bei einer möglichen Ausführungsform innerhalb der Treibdampfleitung aufgrund eines Überdrucks (noch) nicht dampfförmig sein muss, sondern lediglich eine Temperatur aufweisen muss, insbesondere von über 100°C, die gewährleistet, dass aus dem erhitzten Mittel nach einer entsprechenden Entspannung, insbesondere an einer Drossel, Wasserdampf entsteht. Bevorzugt wird zumindest abschnittsweise durch die Treibdampfleitung unmittelbar Wasserdampf transportiert.

Bevorzugt sind in Reihe geschalteten Strahlpumpen als Einzelpumpen ausgebildet und miteinander verbunden. Mit anderen Worten sind die Strahlpumpen separat ausgebildete Pumpen, die zusammengesetzt sind. Durch das Vorsehen von einzelnen Pumpen müssen im Schadensfall einer Pumpe nicht beide Pumpen ersetzt weren. Alternativ kann das Mittel wenigstens zwei in Reihe geschaltete Strahlpumpen aufweisen, die einstückig ausgebildet sind. Hierdurch lassen sich die Herstellungskosten reduzieren.

In einer vorteilhaften Ausführungsform kann eine einer Treibdüse nachgeordnete Kammer der Strahlpumpe zur Aufschäumung von Milch oder Milch-/Luftgemisch genutzt werden.

Bevorzugt ist bei einer Reihenschaltung der Strahlpumpen die erste Treibdüse eingerichtet, Milch oder ein Milch-/Luftgemisch durch eine Milchleitung anzusaugen, wobei Wasserdampf zum Erhitzen der Milch oder des Milch-/Luftgemisches durch eine Auslassöffnung der ersten Treibdüse in die angesaugte Milch oder das Milch-/Luftgemisch zur Erzielung des erhitzten Fluides einleitbar ist. Eine weitere, der ersten Treibdüse nachgeschaltete Treibdüse ist eingerichtet, das erhitzte Fluid anzusaugen, wobei Wasserdampf zum weiteren Erhitzen des Fluides durch eine Auslassöffnung der weiteren Treibdüse in das Fluid einleitbar ist.

Eine Luftleitung kann mit der Milchleitung verbunden sein. Bevorzugt ist die Luftleitung der ersten Treibdüse vorgeschaltet. Mit anderen Worten kann die Luftleitung in Förderrichtung der Milch vor der Treibdüse angeordnet sein. Zum Erzeugen des Milch-/Luftgemisches in der Milchleitung kann Luft aus der Luftleitung in die Milchleitung gefördert und so der Milch zugeführt werden.

Besonders bevorzugt ist bei einer Reihenschaltung der Strahlpumpen eine erste Treibdüse eingerichtet, Milch oder ein Milch-/Luftgemisch durch eine Milchleitung anzusaugen, wobei Wasserdampf zum Erhitzen der Milch oder des Milch-/Luftgemisches durch eine Auslassöffnung der ersten Treibdüse in die angesaugte Milch oder das Milch-/Luftgemisch zur Erzielung des erhitzten Fluides einleitbar ist, Eine weitere, der ersten Treibdüse nachgeschaltete Treibdüse ist eingerichtet, neben dem erhitzten Fluid zusätzlich Luft durch eine Luftleitung anzusaugen, wobei Wasserdampf zum weiteren Erhitzen des mit der Luft versetzten Fluides durch eine Auslassöffnung der zweiten Treibdüse in das luftversetzte Fluid einleitbar ist.

Ganz besonders bevorzugt ist bei einer Reihenschaltung der Strahlpumpen eine erste Treibdüse eingerichtet, Luft durch eine Luftleitung anzusaugen, wobei Wasserdampf zum Erhitzen der Luft durch eine Auslassöffnung der ersten Treibdüse in die angesaugte Luft zur Erzielung des erhitzten Fluides einleitbar ist. Eine weitere, der ersten Treibdüse nachgeschaltete Treibdüse ist eingerichtet, neben dem erhitzen Fluid Milch oder ein Milch-/Luftgemisch durch eine Milchleitung anzusaugen, wobei Wasserdampf zum weiteren Erhitzen des sich daraus ergebenden Fluides durch eine Auslassöffnung der zweiten Treibdüse in das sich ergebende Fluid einleitbar ist.

Ferner liegt der Erfindung auch der Gedanke zugrunde, die Milchtemperatur dadurch auf ein höheres Temperaturniveau zu bringen und die Ansaugsicherheit zu erhöhen, dass das Mittel mindestens zwei parallel geschaltete, insbesondere als Einzelpumpen ausgebildete Strahlpumpen umfasst, die jeweils eine Treibdüse zum Erzeugen von Unterdruck aufweisen, wobei das von einer ersten Treibdüse der ersten Strahlpumpe infolge Unterdruck angesaugte und mittels Wasserdampf erhitzte Fluid von einem einer weiteren Treibdüse der weiteren Strahlpumpe infolge Unterdruck angesaugten und mittels Wasserdampf erhitzten weiteren Fluides weiter erhitzbar ist. Dabei arbeiten bzw. funktionieren beide Strahlpumpen nach dem Venturiprinzip.

Bei einer Parallelschaltung der Strahlpumpen sind die Strahlpumpen in Förderrichtung hin zum Produktauslass nebeneinander bzw. parallel zueinander angeordnet. Durch die Verwendung der Parallelschaltung der Strahlpumpen lässt sich die Ansaugsicherheit auf einfache Weise erhöhen, wobei der benötigte Unterdruck zur Milch-/Milchschaum-Ansaugung verbessert wird. Mit der zweiten vorgesehenen Strahlpumpe ist hierdurch eine zusätzliche Erwärmung des einen Fluids mit dem anderen Fluids zur Erzeugung eines Produkts erzielbar. Damit lässt sich eine höhere Ausgabetemperatur des fertigen Produktes erreichen.

Bevorzugt sind die parallel geschalteten Strahlpumpen als Einzelpumpen ausgebildet. Mit anderen Worten sind die Strahlpumpen separat ausgebildete Pumpen. Durch das Vorsehen von einzelnen Pumpen müssen im schadensfall einer Pumpe nicht beide Pumpen ersetzt werden. Alternativ kann das Mittel wenigstens zwei parallel geschaltete Strahlpumpen aufweisen, die einstückig ausgebildet sind. Hierdurch lassen sich die Herstellungskosten reduzieren.

Besonders zweckmäßig ist bei einer Parallelschaltung der Strahlpumpen eine erste Treibdüse eingerichtet, Milch oder ein Milch-/Luftgemisch durch eine Milchleitung anzusaugen, wobei Wasserdampf zum Erhitzen der Milch oder des Milch-/Luftgemisches durch eine Auslassöffnung der ersten Treibdüse in die angesaugte Milch oder das Milch-/Luftgemisch zur Erzielung des erhitzten Fluides einleitbar ist.

Die zweite Treibdüse kann eingerichtet sein, Luft durch eine Luftleitung anzusaugen, wobei Wasserdampf zum Erhitzen der Luft durch eine Auslassöffnung der zweiten Treibdüse in die Luft zur Erzielung eines erhitzten weiteren Fluides einleitbar.

Alternativ ist die zweite Treibdüse eingerichtet, Milch oder ein Milch-/Luftgemisch durch die Milchleitung anzusaugen, wobei Wasserdampf zum Erhitzen der Milch oder des Milch-/Luftgemischs durch eine Auslassöffnung der zweiten Treibdüse in die angesaugte Milch oder das Milch-/Luftgemisch zur Erzielung eines erhitzten weiteren Fluides einleitbar ist.

Eine Luftleitung kann mit der Milchleitung verbunden sein. Bevorzugt ist die Luftleitung der Treibdüse vorgeschaltet. Mit anderen Worten kann die Luftleitung in Förderrichtung der Milch vor der Treibdüse angeordnet sein. Zum Erzeugen des Milch-/Luftgemisches in der Milchleitung kann Luft aus der Luftleitung in die Milchleitung gefördert und so der Milch zugeführt werden.

Ganz besonders bevorzugt weist die Getränkezubereitungsvorrichtung eine kombinierte Parallel- und Reihenschaltung mindestens dreier Strahlpumpen auf. Auf diese Weise lassen sich eine Vielzahl von Kombinationsmöglichkeiten und Mischformen aus wenigstens einer Reihen- und einer Parallelschaltung miteinander kombinieren.

Erfindungsgemäß sind die Treibdüsen über unterschiedliche Treibdampfleitungen oder über über eine gemeinsame verzweigte Treibdampfleitung versorgbar. Hierdurch ist eine individuelle Wasserdampfversorgung der Treibdüsen auf einfache Weise erreichbar. Dabei können ein Wassereintrag und/oder eine Dampfleistung an den Treibdüsen unterschiedlich sein.

Weiterhin erfindungsgemäß weist die wenigsten eine Treibdampfleitung eine Drosselvorrichtung oder eine Zeitverzögerungsvorrichtung auf. Hierdurch ist eine Wasserdampfzufuhr zu den Treibdüsen auf einfache Weise regelbar.

Ganz besonders vorteilhaft hat sich herausgestellt, dass mindestens eine der Strahlpumpen mit einer zusätzliche Bohrung zu versehen. Über die zusätzlichen Bohrung ist weiteres Fluid in Form von Milch, Luft oder eines Milch-/Luftgemisches in die Strahlpumpe einbringbar. Hierdurch ist es möglich, die Milchtemperatur zusätzlich zu beeinflussen.

Besonders vorteilhaft ist eine der Treibdüsen als Bypass-Dampf-Treibdüse ausgebildet. Dabei kann eine Wasserdampfabgabe in einer Quer- oder Längsrichtung zur Achse der zweiten Strahlpumpe bzw. der Kammer der zweiten Strahlpumpe oder bevorzugt einer Stellung zwischen der Quer- oder Längsrichtung erfolgen.

Ein erfindungsgemäßes Verfahren zum Betreiben einer erfindungsgemäßen Getränkezubereitungsvorrichtung mit mindestens zwei in Reihe geschalteten und jeweils eine Treibdüse aufweisenden, insbesondere als Einzelpumpen ausgebildete und miteinander verbundene Strahlpumpen, weist die aufeinander folgenden Schritte auf:
- Ansaugen eines Fluides infolge mittels von einer ersten Treibdüse erzeugtem Unterdruck und Erhitzen des Fluides mittels aus der ersten Treibdüse gefördertem Wasserdampf und
- Ansaugen des erhitzten Fluides mittels von einer zweiten Treibdüse erzeugtem Unterdruck und weiteres Erhitzen des Fluides mittels aus der zweiten Treibdüse gefördertem Wasserdampf.

Durch die Verwendung der Reihenschaltung der Strahlpumpen lässt sich die Milchtemperatur auf ein höheres Temperaturniveau bringen bei gleichzeitiger Erhöhung der Ansaugsicherheit.

Ein zweites nicht von der Erfindung erfasstes Verfahren zum Betreiben einer Getränkezubereitungsvorrichtung mit mindestens zwei parallel geschalteten und jeweils eine Treibdüse aufweisenden Strahlpumpen, insbesondere als Einzelpumpen ausgebildete Strahlpumpen, weist die aufeinander folgenden Schritte auf:
- Ansaugen eines ersten Fluides infolge mittels von einer ersten Treibdüse erzeugtem Unterdruck und Erhitzen des Fluides mittels aus der ersten Treibdüse gefördertem Wasserdampf und
- Ansaugen eines weiteren Fluides mittels von einer zweiten Treibdüse erzeugtem Unterdruck und Erhitzen des weiteren Fluides mittels aus der zweiten Treibdüse gefördertem Wasserdampf und
- weiteres Erhitzen des ersten Fluides mittels des weiteren Fluides.

Durch die Verwendung der Parallelschaltung der Strahlpumpen lässt sich die Milchtemperatur auf ein höheres Temperaturniveau bringen bei gleichzeitiger Erhöhung der Ansaugsicherheit.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
Fig. 1: ein Fluidschema einer als Kaffeemaschine ausgebildeten Getränkezubereitungsvorrichtung,
Fig. 2: eine Detaildarstellung einer ersten Ausführungsform von Teilen eines Milcherhitzungsmittels,
Fig. 3: eine Detaildarstellung einer zweiten Ausführungsform von Teilen eines Milcherhitzungsmittels,
Fig. 4: eine Detaildarstellung einer dritten Ausführungsform von Teilen eines Milcherhitzungsmittels,
Fig. 5: eine Detaildarstellung einer vierten Ausführungsform von Teilen eines Milcherhitzungsmittels,
Fig. 6: eine Detaildarstellung einer fünften Ausführungsform von Teilen eines Milcherhitzungsmittels,
Fig. 7: eine Detaildarstellung einer sechsten nicht zur Erfindung gehörigen Ausführungsform von Teilen eines Milcherhitzungsmittels,
Fig. 8: eine Detaildarstellung einer siebten nicht zur Erfindung gehörigen Ausführungsform von Teilen eines Milcherhitzungsmittels und
Fig. 9: eine Detaildarstellung einer achten Ausführungsform von Teilen eines Milcherhitzungsmittels.

In den Figuren sind gleiche Elemente und Elemente mit der gleichen Funktion mit den gleichen Bezugszeichen gekennzeichnet.

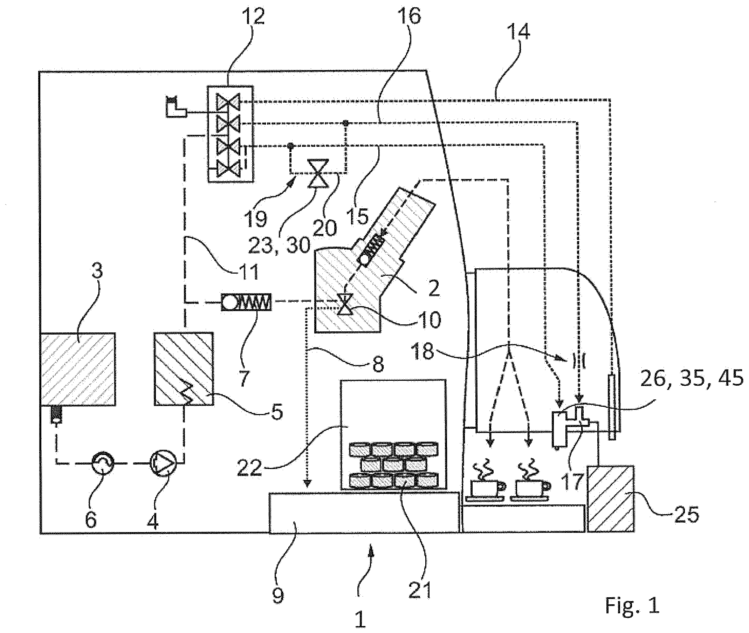

In Fig. 1 ist ein Fluidsystem einer als eine eine Brüheinheit 2 aufweisende Kaffeemaschine, hier ein Kaffeevollautomat ausgebildete Getränkezubereitungsvorrichtung 1 gezeigt. Die Getränkezubereitungsvorrichtung 1 umfasst einen Wassertank 3, aus welchem mittels einer Förderpumpe 4 Wasser zu einer Heizeinrichtung 5 förderbar ist, wobei die Wassermenge mittels eines Durchflussmessers 6 erfasst wird. In Strömungsrichtung des Wassers nach der Heizeinrichtung 5, mit der das Wasser, je nach Bedarf auf eine Brühtemperatur oder alternativ auf über 100°C erhitzbar ist, ist ein Überdruckventil 7 nachgeschaltet, durch welches Wasser zum Brühen von Kaffee in Richtung einer Brüheinheit 2 gefördert wird, in welcher mittels einer nicht dargestellten, insbesondere in die Vorrichtung 1 integrierten Kaffeemühle gemahlenes Kaffeemehl ausgelaugt wird.

Ein Drainageventil 10 steuert dabei den Fluidfluss. D.h. durch das Überdruckventil 7 gefördertes Wasser kann alternativ zur Kaffeemehlauslaugung genutzt werden oder in Richtung einer Drainage 8 abgeführt werden, die zu einer Tropfschale 9 führt. Insofern dient das Überdruckventil 7 auch zum Abbau eines unzulässigen Überdrucks im Bereich der Heizeinrichtung 5, in dem dieser Überdruck über das Drainageventil 10 und die Drainage 8 abgeführt werden kann. Ausgelaugtes Kaffeemehl gelangt in Form von Tresterkuchen 21 in einen Tresterbehälter 22.

Eine Fluidleitung 11 führt von der Heizeinrichtung 5 zu einem als Keramikventil ausgebildeten automatisiert betätigbaren Mehrwegeventil, über welches je nach Betriebsmodus eine Heißwasserleitung 14 mit heißem Wasser versorgt werden kann, oder eine Treibdampfleitung 15 alternativ mit Dampf oder mit über 100°C erhitztem Wasser oder eine Leitung 16 mit Luft zum Aufschäumen von Milch.

Die Leitung 16 ist als eine Luftleitung ausgebildet. Sie kann, je nach Betriebsmodus auch als eine zusätzliche Dampfleitung verwendet werden, durch die Wasserdampf oder alternativ über 100°C erhitztes Wasser zur Generierung von Wasserdampf nach der Entspannung gefördert werden kann. Auch kann die Leitung 16 durch eine entsprechende Ventilstellung des Mehrwegeventils 12 als Reinigungsleitung zum Spülen einer Milchleitung 17 mit Heißwasser oder Dampf genutzt werden. In der Leitung 16 ist eine Drossel 18 vorgesehen.

In dem konkreten Ausführungsbeispiel sind der Heizeinrichtung Aufteilmittel 19 zugeordnet. Diese umfassen eine Abzweig- bzw. Verbindungsleitung 20, mit der der durch die Fluidleitung 11 strömende Wasserdampf oder das über 100°C erhitzte Wasser zur Dampferzeugung aufgeteilt werden kann auf die Treibdampfleitung 15 und die Leitung 16.

In der Verbindungsleitung 20 befinden sich zusätzlich zu dem Mehrwegeventil 12 Ventilmittel 23 in Form eines manuell oder alternativ motorisch betätigbaren Ventils 30, über welches die Verbindungsleitung 20 geöffnet oder geschlossen werden kann, um den Wasserdampf bzw. das sehr hei-ße Wasser aufzuteilen oder ausschließlich über die Treibdampfleitung 15 den Treibdüsen 36, 46 zuzuführen, die nach dem Venturiprinzip arbeiten und die einen Unterdruck erzeugen aufgrund dessen ein Fluid über die Milchleitung 17 und/oder die Luftleitung 16 ansaugbar sind.

Eine Versorgung der Treibdüsen 36, 46 erfolgt erfindungsgemäß über eine Treibdampfleitung 15 oderüber zwei voneinander unabhängige Treibdampfleitungen. Außerdem weist wenigsten eine der Treibdampfleitungen 15 erfindungsgemäß eine Drosselvorrichtung und/oder eine Zeitverzögerungsvorrichtung auf. Hierdurch lässt sich gemäß der Erfindung eine individuelle Wasserdampfversorgung an den Treibdüsen 36, 46 einstellen.

Nach einem erfolgreichen Anlaufen des Milchstroms werden die Ventilmittel 23 geöffnet (zweite Phase), so dass das durch die Fluidleitung 11 strömende dampfförmige oder zur Dampferzeugung vorgesehene Mittel, insbesondere Fluid, eingeleitet werden kann in die Treibdampfleitung 15. Zusätzlich kann auch eine Aufteilung stattfinden zwischen der Treibdampfleitung 15 und der Leitung 16, um beispielsweise zusätzlich Wasserdampf in das Mittel 26 einzutragen oder um eine Reinigung der Strahlpumpen zu erzielen. Die Ventilmittel 23 können bei alternativer Ausgestaltung des Mehrwegeventils 12 auch Teil dieses Mehrwegeventils sein, wobei dann auf das Ventil 30 verzichtet werden kann.

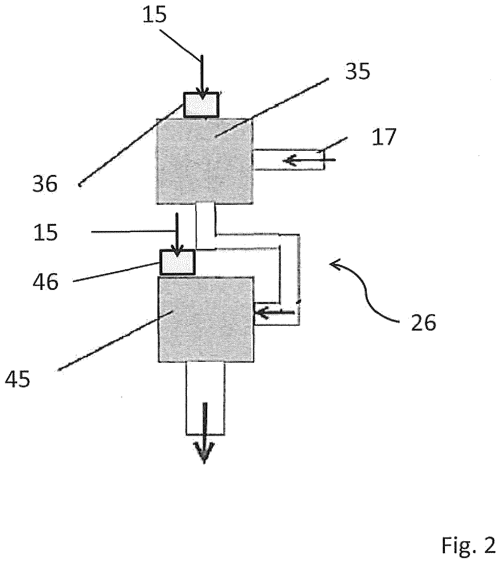

Auf den Aufbau der die Treibdüsen 36, 46 aufweisenden Milcherhitzungsmittel 26 wird auf die nachfolgenden Fig. 2 bis 9 verwiesen.

In Fig. 2 ist ein grundlegender Aufbau einer möglichen Ausführungsform von Teilen eines Milcherhitzungsmittels 26 gezeigt. Dabei sind zwei in Reihe geschaltete Strahlpumpen 35, 45 vorgesehen, die jeweils eine Treibdüse 36, 46 zum Erzeugen von Unterdruck aufweisen. Die Treibdüsen 36, 46 arbeiten bzw. funktionieren nach dem Venturiprinzip.

Ein von einer ersten Treibdüse 36 der ersten Strahlpumpe 35 infolge Unterdruck angesaugtes und mittels Wasserdampf erhitztes Fluid wird zusätzlich von einer weiteren Treibdüse 46 der weiteren Strahlpumpe 45 angesaugt und wiederum mittels Wasserdampf erhitzt. Das Fluid wird über eine Milchleitung 17 zur ersten Strahlpumpe 35 und dann weiter zur zweiten Strahlpumpe 45 gefördert. Dabei wird der Wasserdampf über eine Treibdampfleitung 15 in die erste Strahlpumpe 35 als auch in die zweite Strahlpumpe eingebracht. Alternativ sind auch zwei Treibdampfleitungen denkbar.

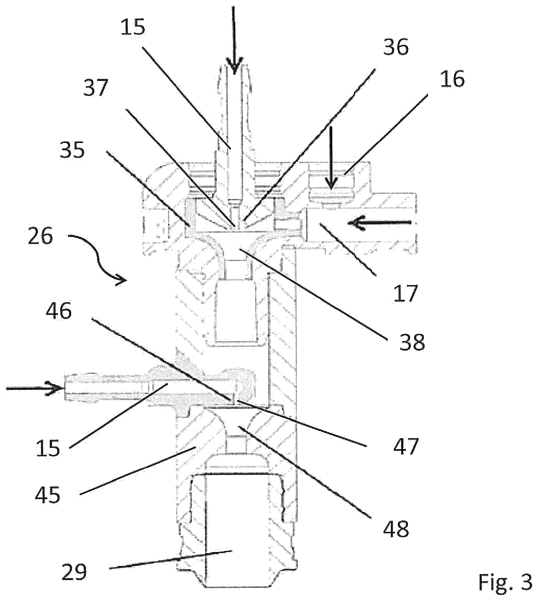

In Fig. 3 ist beispielhaft ein Ausschnitt von Milcherhitzungsmitteln 26 gezeigt.

Zu erkennen ist die erste Strahlpumpe 35 mit einer ersten Treibdüse 36 in die Wasserdampf oder zur Erzeugung von Wasserdampf vorgesehenes, d.h. entsprechend erhitztes Heißwasser wird über die Treibdampfleitung 15 zugeführt. Wasserdampf tritt an einer Auslassöffnung 37 der nach dem Venturiprinzip arbeitenden Treibdüse aus in eine der ersten Treibdüse 36 nachgeordnete Kammer 38, die zur Aufschäumung von Milch genutzt werden kann.

Weiterhin ist die zweite Strahlstufe 45 mit einer zweiten Treibdüse 46 zu erkennen, in die Wasserdampf oder zur Erzeugung von Wasserdampf vorgesehenes, d.h. entsprechend erhitztes Heißwasser wird über die Treibdampfleitung 15 zugeführt. Wasserdampf tritt an einer Auslassöffnung 47 der nach dem Venturiprinzip arbeitenden Treibdüse aus in eine der zweiten Treibdüse 46 nachgeordnete Kammer 48, die weiterhin zur Aufschäumung von Milch genutzt werden kann.

Die zweite Treibdüse 46 ist als Bypass-Dampf-Treibdüse ausgebildet. Die Wasserdampfabgabe aus der zweiten Treibdüse 46 erfolgt parallel zur Achse der zweiten Strahlpumpe bzw. der Kammer 48 der zweiten Strahlpumpe 45 in die Kammer 48. Alternativ könnte die Wasserdampfabgabe aus der zweiten Treibdüse 46 auch senkrecht zur Achse der zweiten Strahlpumpe bzw. der Kammer 48 der zweiten Strahlpumpe 45 in die Kammer 48 erfolgen.

In die Kammer 38 mündet eine Milchleitung 17, durch welche aus einem nicht dargestellten Milchbehältnis aufgrund des Venturieffektes Milch angesaugt wird, wenn Wasserdampf aus der ersten Auslassöffnung 37 ausströmt.

Konkret saugt die erste Treibdüse 36 Milch oder alternativ ein Milch-/Luftgemisch durch die Milchleitung 17 an, wobei Wasserdampf zum Erhitzen der Milch oder des Milch-/Luftgemisches durch die Auslassöffnung 37 der ersten Treibdüse 36 in die angesaugte Milch oder das Milch-/Luftgemisch zur Erzielung des erhitzten Fluides eingeleitet wird. Im Anschluss daran saugt die zweite Treibdüse 46 das erhitzte Fluid an, wobei Wasserdampf zum weiteren Erhitzen des Fluides durch die Auslassöffnung 47 der zweiten Treibdüse 46 in das Fluid eingeleitet wird. Das dabei entstehende Produkt wird dann über die Auslassleitung 29 abgegeben.

Zum Erzeugen des Milch-/Luftgemisches in der Milchleitung 17 wird Luft aus der Luftleitung 16 in die Milchleitung 17 gefördert und kann somit der Milch zugeführt werden. Dabei ist die Luftleitung 16 mit der Milchleitung 17 verbunden. Die Luftleitung 16 ist der ersten Treibdüse 36 vorgeschaltet. Mit anderen Worten ist die Luftleitung 16 in Förderrichtung der Milch vor der Treibdüse 36 angeordnet.

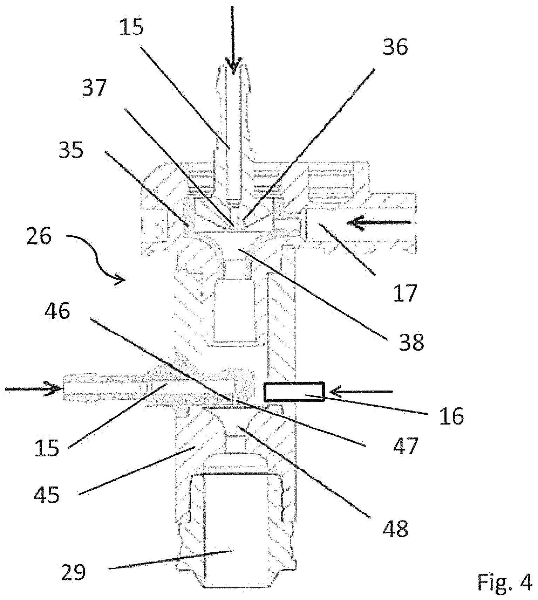

In Fig. 4 ist beispielhaft ein weiterer Ausschnitt von Milcherhitzungsmitteln 26 gezeigt. Der Aufbau der Milcherhitzungsmittel 26 entspricht grundsätzlich dem der oben beschrieben Milcherhitzungsmittel 26 aus Fig. 3. Dabei ist die Luftleitung 16 aber nicht mehr mit der Milchleitung 17 verbunden. Vielmehr ist die Luftleitung 16 der zweiten Treibdüse 46 zugeordnet. Konkret ist die Luftleitung 16 im Bereich unterhalb der ersten Kammer 38 im Bereich der zweiten Treibdüse 46 angeordnet.

Die zweite Treibdüse 46 saugt neben dem erhitzten Fluid zusätzlich Luft durch die Luftleitung 16 an, wobei Wasserdampf zum weiteren Erhitzen des mit der zusätzlichen Luft versetzten Fluides durch eine Auslassöffnung 47 der zweiten Treibdüse 46 in das luftversetzte Fluid eingeleitet wird. Das dabei entstehende Produkt wird dann über die Auslassleitung 29 abgegeben.

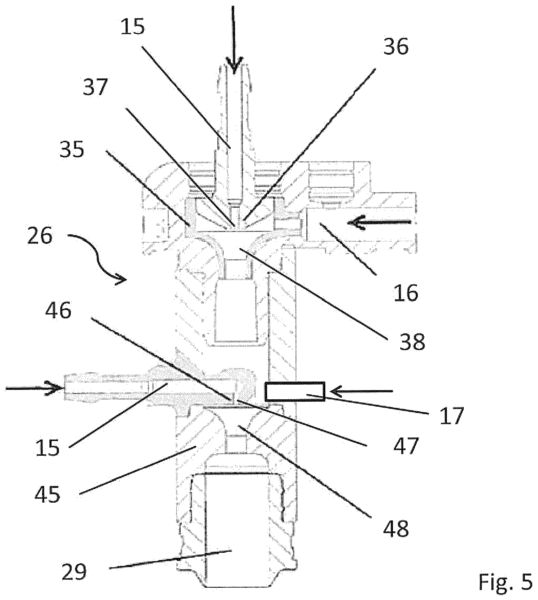

In Fig. 5 ist beispielhaft ein weiterer Ausschnitt von Milcherhitzungsmitteln 26 gezeigt. Der Aufbau der Milcherhitzungsmittel 26 entspricht grundsätzlich dem der oben beschrieben Milcherhitzungsmittel 26 aus Fig. 4.

Im Unterschied zur Fig. 4 sind jedoch die Milchleitung 17 und die Luftleitung 16 vertauscht. Damit saugt die erste Treibdüse 36 Luft durch die Luftleitung 16 an, wobei Wasserdampf zum Erhitzen der Luft durch die Auslassöffnung 37 der ersten Treibdüse 36 in die angesaugte Luft zur Erzielung des erhitzten Fluides eingeleitet wird. Im Anschluss daran saugt die zweite Treibdüse 46 neben dem erhitzen Fluid Milch oder ein Milch-/Luftgemisch durch die Milchleitung 17 an, wobei Wasserdampf zum weiteren Erhitzen des sich daraus ergebenden Fluides durch die Auslassöffnung 47 der zweiten Treibdüse 46 in das sich ergebende Fluid eingeleitet wird. Das dabei entstehende Produkt wird dann über die Auslassleitung 29 abgegeben.

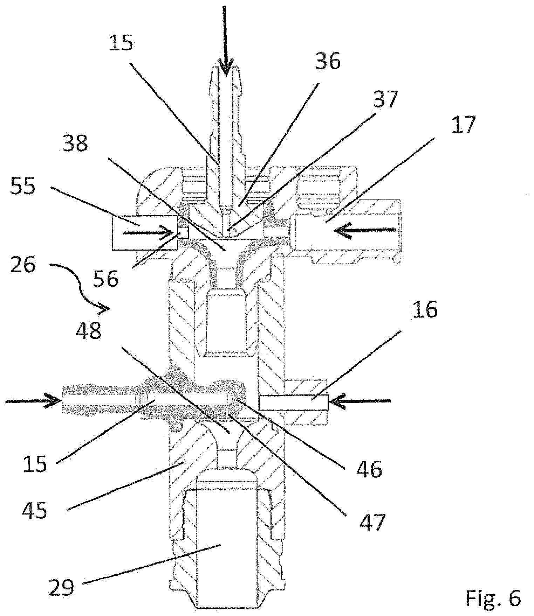

In Fig. 6 ist beispielhaft ein weiterer Ausschnitt von Milcherhitzungsmitteln 26 gezeigt. Der Aufbau der Milcherhitzungsmittel 26 entspricht grundsätzlich dem der oben beschrieben Milcherhitzungsmittel 26 aus Fig. 4.

Im Unterschied zur Fig. 4 ist noch eine Zusatzbohrung 55 mit einer Auslassöffnung 56 angeordnet. Damit lässt sich weiteres Fluid in Form von Milch, Luft oder Milch-/Luftgemisch in die erste Strahlpumpe 35 und/oder die zweite Strahlpumpe 45 einbringen. Auch hier können die Milchleitung 17 und die Luftleitung 16 wieder vertauscht angeordnet sein. Das dabei entstehende Produkt wird dann über die Auslassleitung 29 abgegeben.

Mit der Reihenanordnung der Strahlpumpen gemäß den Fig. 2 bis 6 ist es auf einfache Weise möglich, die Ansaugsicherheit auf einfache Weise zu erhöhen, wobei der benötigte Unterdruck zur Milch-/Milchschaum-Ansaugung verbessert wird. Mit der zweiten vorgesehenen Strahlpumpe ist hierdurch eine zusätzliche Erwärmung des fertigen Produkts auf bis zu 90°C erzielbar. Damit lässt sich eine höhere Ausgabetemperatur des fertigen Produktes erreichen.

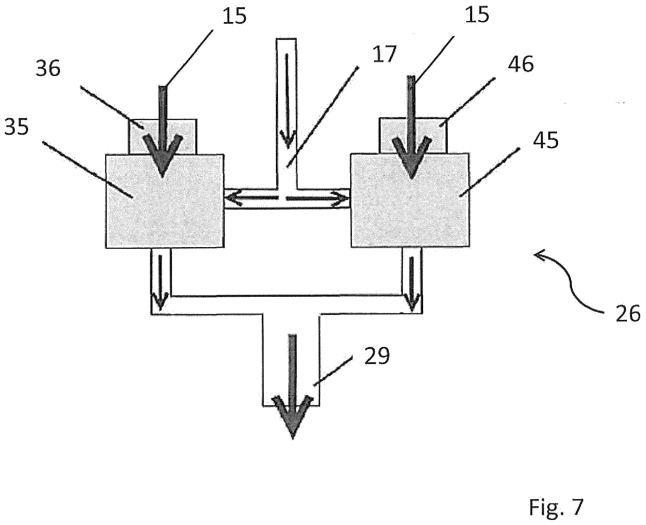

In Fig. 7 ist ein möglicher Aufbau einer weiteren Ausführungsform von Teilen von Milcherhitzungsmitteln 26 gezeigt, die nicht Teil der vorliegenden Erfindung sind. Dabei sind zwei parallel geschaltete Strahlpumpen 35, 45 vorgesehen, die jeweils eine Treibdüse 36, 46 zum Erzeugen von Unterdruck aufweisen. Ein von der ersten Treibdüse 36 der ersten Strahlpumpe 35 infolge Unterdruck angesaugtes und mittels Wasserdampf erhitzte Fluid wird weiter von einem der zweiten Treibdüse 46 der zweiten Strahlpumpe 45 infolge Unterdruck angesaugten und mittels Wasserdampf erhitzten weiteren Fluides weiter erhitzt.

Konkret saugt die erste Treibdüse 36 Milch oder ein Milch-/Luftgemisch durch eine Milchleitung 17 an. Dabei wird Wasserdampf zum Erhitzen der Milch oder des Milch-/Luftgemisches durch eine Auslassöffnung (nicht gezeigt) der ersten Treibdüse 36 in die angesaugte Milch oder das Milch-/Luftgemisch zur Erzielung des erhitzten Fluides eingeleitet.

Gleichzeitig saugt die zweite Treibdüse 46 ebenfalls Milch oder ein Milch-/Luftgemisch durch die Milchleitung 17 an. Dabei wird Wasserdampf zum Erhitzen der Milch oder des Milch-/Luftgemischs durch eine Auslassöffnung (nicht gezeigt) der zweiten Treibdüse 46 in die angesaugte Milch oder das Milch-/Luftgemisch zur Erzielung eines erhitzten weiteren Fluides eingeleitet.

Zum Erzeugen des Milch-/Luftgemisches in der Milchleitung 17 kann Luft aus einer Luftleitung 16 (nicht gezeigt), die mit der Milchleitung 17 verbunden ist, in die Milchleitung 17 gefördert und somit der Milch zugeführt.

Das erste erhitzte Fluid weist eine gegenüber dem zweiten erhitzten Fluid eine geringere Temperatur auf, so dass das zweite Erhitze Fluid das erste erhitzte Fluid zusätzlich erwärmen kann. Das dabei entstehende Produkt wird dann über die Auslassleitung 29 abgegeben.

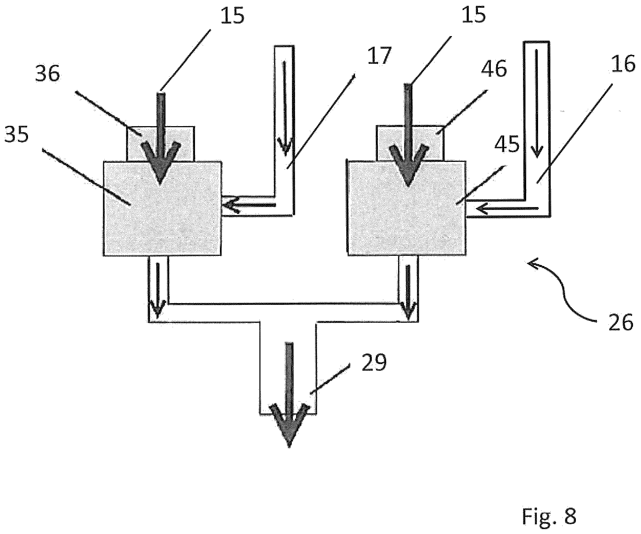

In Fig. 8 ist ein möglicher Aufbau einer weiteren Ausführungsform von Teilen von Milcherhitzungsmitteln 26 gezeigt, die nicht Teil der vorliegenden Erfindung sind. Dabei sind zwei parallel geschaltete Strahlpumpen 35, 45 vorgesehen, die jeweils eine Treibdüse 36, 46 zum Erzeugen von Unterdruck aufweisen. Ein von der ersten Treibdüse 36 der ersten Strahlpumpe 35 infolge Unterdruck angesaugtes und mittels Wasserdampf erhitzte Fluid wird weiter von einem der zweiten Treibdüse 46 der zweiten Strahlpumpe 45 infolge Unterdruck angesaugten und mittels Wasserdampf erhitzten weiteren Fluides weiter erhitzt. Im Unterschied zur Fig. 7 ist keine gemeinsame Milchleitung 17 vorgesehen.

Konkret saugt die erste Treibdüse 36 Milch oder ein Milch-/Luftgemisch durch eine Milchleitung 17 an. Dabei wird Wasserdampf zum Erhitzen der Milch oder des Milch-/Luftgemisches durch eine Auslassöffnung (nicht gezeigt) der ersten Treibdüse 36 in die angesaugte Milch oder das Milch-/Luftgemisch zur Erzielung des erhitzten Fluides eingeleitet.

Zum Erzeugen des Milch-/Luftgemisches in der Milchleitung 17 kann Luft aus einer Luftleitung 16 (nicht gezeigt), die mit der Milchleitung 17 verbunden ist, in die Milchleitung 17 gefördert und somit der Milch zugeführt werden.

Die zweite Treibdüse 36 saugt Luft durch eine Luftleitung 16 an, wobei Wasserdampf zum Erhitzen der Luft durch eine Auslassöffnung (nicht gezeigt) der zweiten Treibdüse 46 in die Luft zur Erzielung eines erhitzten weiteren Fluides einleitbar ist.

Wie schon zur Fig. 7 beschrieben, weist das erste erhitzte Fluid eine gegenüber dem zweiten erhitzten Fluid eine geringere Temperatur auf, so dass das zweite erhitze Fluid das erste erhitzte Fluid zusätzlich erwärmen und bevorzugt aufschäumen, kann. Das dabei entstehende Produkt wird dann über die Auslassleitung 29 abgegeben.

Mit der Parallelanordnung der Strahlpumpen gemäß den Fig. 7 bis 8 ist es auf einfache Weise möglich, die Ansaugsicherheit auf einfache Weise erhöhen lässt, wobei der benötigte Unterdruck zur Milch-/Milchschaum-Ansaugung verbessert wird.

Mit der zweiten vorgesehenen Strahlpumpe ist hierdurch eine zusätzliche Erwärmung des Produkts erzielbar. Damit lässt sich eine höhere Ausgabetemperatur des fertigen Produkts auf bis zu 90°C erreichen.

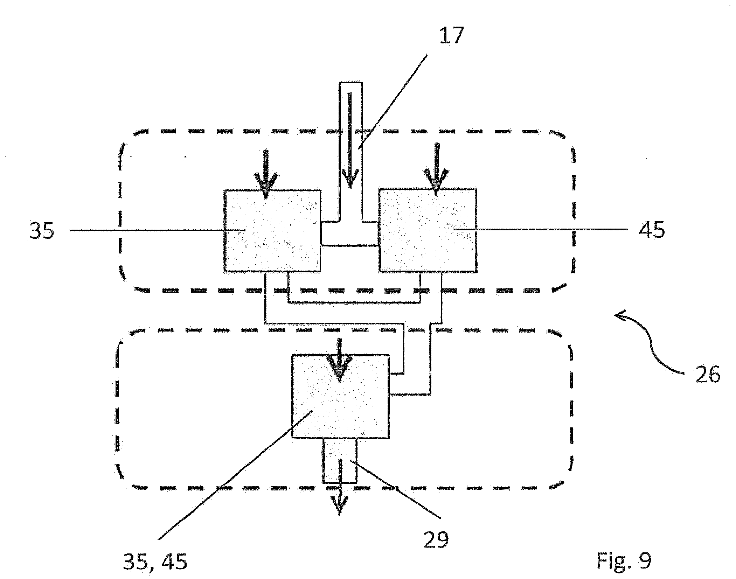

In Fig. 9 ist eine kombinierte Parallel- und Reihenschaltung dreier Strahlpumpen 35, 45 gezeigt. Eine in Förderrichtung erste Strahlpumpe 35 ist mit einer zweiten Strahlpumpe 45 parallel geschaltet. Den beiden genannten Strahlpumpen 35 und 45 ist eine weitere Strahlpumpe 35, 45 in Reihe nachgeschaltet. Hierdurch lässt sich die Milchtemperatur auf ein höheres Temperaturniveau bringen bei gleichzeitiger Erhöhung der Ansaugsicherheit.

Mit einer Mischung der Anordnungen gemäß Fig. 9 ist es auf einfache Weise möglich, die Ansaugsicherheit auf einfache Weise erhöhen lässt, wobei der benötigte Unterdruck zur Milch-/Milchschaum-Ansaugung verbessert wird. Mit der zweiten vorgesehenen Strahlpumpe ist hierdurch eine zusätzliche Erwärmung des Produkts erzielbar. Damit lässt sich eine höhere Ausgabetemperatur des fertigen Produkts auf bis zu 90°C erreichen.

## Patentansprüche

1. Getränkezubereitungsvorrichtung (1), insbesondere Kaffeemaschine mit einer Brüheinheit (2) zum Auslaugen von Kaffeemehl, mit mindestens einem Mittel (26) zum Erhitzen eines Fluides, insbesondere Milch, mit Wasserdampf, umfassend eine Heizeinrichtung (5) zum Erhitzen von Wasser zur Bildung von Wasserdampf, das Mittel (26) mindestens zwei in Reihe geschaltete, insbesondere als Einzelpumpen ausgebildete und miteinander verbundene Strahlpumpen (35, 45) umfasst, die jeweils eine Treibdüse (36, 46) zum Erzeugen von Unterdruck aufweisen, wobei das von einer ersten Treibdüse (36) der ersten Strahlpumpe (35) infolge Unterdruck angesaugte und mittels Wasserdampf erhitzte Fluid zusätzlich von einer weiteren Treibdüse (46) der weiteren Strahlpumpe (45) ansaugbar und weiter mittels Wasserdampf erhitzbar ist wobei die Treibdüsen (36, 46) über unterschiedliche Treibdampfleitungen (15) oder über eine gemeinsame, verzweigte Treibdampfleitung (15) versorgbar sind, **dadurch gekennzeichnet, dass** wenigstens eine Treibdampfleitung (15) eine Drosselvorrichtung oder eine Zeitverzögerungsvorrichtung aufweist, welche so ausgestaltet ist/sind, dass sich eine individuelle Wasserdampfversorgung an den Treibdüsen (36, 46) einstellen lässt.

2. Getränkezubereitungsvorrichtung (1) nach Anspruch 1, **dadurch gekennzeichnet,**
**dass** die erste Treibdüse (36) eingerichtet ist, Milch oder ein Milch-/Luftgemisch durch eine Milchleitung (17) anzusaugen, wobei Wasserdampf zum Erhitzen der Milch oder des Milch-/Luftgemisches durch eine Auslassöffnung (37) der ersten Treibdüse (36) in die angesaugte Milch oder das Milch-/Luftgemisch zur Erzielung des erhitzten Fluides einleitbar ist, und wobei eine weitere, der ersten Treibdüse (36) nachgeschaltete Treibdüse (46) eingerichtet ist, das erhitzte Fluid anzusaugen, wobei Wasserdampf zum weiteren Erhitzen des Fluides durch eine Auslassöffnung (47) der weiteren Treibdüse (46) in das Fluid einleitbar ist.

3. Getränkezubereitungsvorrichtung (1) nach Anspruch 1,
**dadurch gekennzeichnet,**
**dass** eine erste Treibdüse (36) eingerichtet ist, Milch oder ein Milch-/Luftgemisch durch eine Milchleitung (17) anzusaugen, wobei Wasserdampf zum Erhitzen der Milch oder des Milch-/Luftgemisches durch eine Auslassöffnung (37) der ersten Treibdüse (36) in die angesaugte Milch oder das Milch-/Luftgemisch zur Erzielung des erhitzten Fluides einleitbar ist, und wobei eine weitere, der ersten Treibdüse (36) nachgeschaltete Treibdüse (46) eingerichtet ist, neben dem erhitzten Fluid zusätzlich Luft durch eine Luftleitung (16) anzusaugen, wobei Wasserdampf zum weiteren Erhitzen des mit der Luft versetzten Fluides durch eine Auslassöffnung (47) der zweiten Treibdüse (46) in das luftversetzte Fluid einleitbar ist.

4. Getränkezubereitungsvorrichtung (1) nach Anspruch 1,
**dadurch gekennzeichnet,**
**dass** eine erste Treibdüse (36) eingerichtet ist, Luft durch eine Luftleitung (16) anzusaugen, wobei Wasserdampf zum Erhitzen der Luft durch eine Auslassöffnung (37) der ersten Treibdüse (36) in die angesaugte Luft zur Erzielung des erhitzten Fluides einleitbar ist, und wobei eine weitere, der ersten Treibdüse (36) nachgeschaltete Treibdüse (46) eingerichtet ist, neben dem erhitzen Fluid Milch oder ein Milch-/Luftgemisch durch eine Milchleitung (17) anzusaugen, wobei Wasserdampf zum weiteren Erhitzen des sich daraus ergebenden Fluides durch eine Auslassöffnung (47) der zweiten Treibdüse (46) in das sich ergebende Fluid einleitbar ist.

5. Getränkezubereitungsvorrichtung (1) nach einem der Ansprüche 1-4 aufweisend eine kombinierte Parallel- und Reihenschaltung mindestens dreier Strahlpumpen (35, 45).

6. Getränkezubereitungsvorrichtung (1) nach einem der vorstehenden Ansprüche,
**dadurch kennzeichnet,**
**dass** mindestens eine der Strahlpumpen (35, 45) eine zusätzliche Bohrung (55) aufweist.

7. Getränkezubereitungsvorrichtung (1) nach Anspruch 6,
**dadurch kennzeichnet,**
**dass** über die zusätzlichen Bohrung (55) weiteres Fluid in die Strahlpumpe (35,45) einbringbar ist.

8. Verfahren zum Betreiben einer Getränkezubereitungsvorrichtung (1)nach einem der Ansprüche 1 bis 7, mit mindestens zwei in Reihe geschalteten und jeweils eine Treibdüse (36, 46) aufweisenden, insbesondere als Einzelpumpen ausgebildete und miteinander verbundene Strahlpumpen (35, 45), aufweisend die aufeinander folgenden Schritte:
- Ansaugen eines Fluides infolge mittels von einer ersten Treibdüse (36) erzeugtem Unterdruck und Erhitzen des Fluides mittels aus der ersten Treibdüse (36) gefördertem Wasserdampf und
- Ansaugen des erhitzten Fluides mittels von einer zweiten Treibdüse (46) erzeugtem Unterdruck und weiteres Erhitzen des Fluides mittels aus der zweiten Treibdüse (46) gefördertem Wasserdampf.

## Claims

1. A beverage preparation device (1), in particular a coffee machine having a brewing unit (2) for the lixiviation of ground coffee, having at least one device (26) for heating a fluid, in particular milk, with steam, said beverage preparation device (1) comprising a heating device (5) for heating water for the formation of steam, the device (26) comprising at least two jet pumps (35, 45) which are connected in series, in particular realized as single pumps and connected to each other, each jet pump (35, 45) having a drive nozzle (36, 46) for generating a vacuum, the fluid aspirated by a first drive nozzle (36) of the first jet pump (35) as a result of a vacuum and heated by means of steam being additionally capable of being aspirated by another drive nozzle (46) of the other jet pump (45) and of being further heated by means of steam, the drive nozzles (36, 46) being capable of being supplied via different driving steam lines (15) or via a common, branched driving steam line (15), **characterized in that** at least one driving steam line (15) has a throttle device or a time delay device realized in such a manner that it is possible to set an individual steam supply at the drive nozzles (36, 46).

2. The beverage preparation device (1) according to claim 1,
**characterized in that**
the first drive nozzle (36) is designed to aspirate milk or a milk/air mixture through a milk line (17), for heating the milk or the milk/air mixture, steam being introducible through an outlet opening (37) of the first drive nozzle (36) into the aspirated milk or the milk/air mixture in order to obtain the heated fluid, and another drive nozzle (46) connected downstream of the first drive nozzle (36) being designed to aspirate the heated fluid, steam being introducible into the fluid through an outlet opening (47) of the other drive nozzle (46) in order to further heat the fluid.

3. The beverage preparation device (1) according to claim 1,
**characterized in that**
a first drive nozzle (36) is designed to aspirate milk or a milk/air mixture through a milk line (17), for heating the milk or the milk/air mixture, steam being introducible through an outlet opening (37) of the first drive nozzle (36) into the aspirated milk or the milk/air mixture in order to obtain the heated fluid, and another drive nozzle (46) connected downstream of the first drive nozzle (36) being designed to aspirate, in addition to the heated fluid, additionally air through an air tube (16), steam being introducible through an outlet opening (47) of the second drive nozzle (46) into the fluid mixed with air in order to further heat the fluid mixed with air.

4. The beverage preparation device (1) according to claim 1,
**characterized in that**
a first drive nozzle (36) is designed to aspirate air through an air tube (16), for heating the air, steam being introducible through an outlet opening (37) of the first drive nozzle (36) into the aspirated air in order to obtain the heated fluid, and another drive nozzle (46) connected downstream of the first drive nozzle (36) being designed to aspirate, in addition to the heated fluid, milk or a milk/air mixture through a milk line (17), steam being introducible through an outlet opening (47) of the second drive nozzle (46) into the resulting fluid in order to further heat the fluid resulting therefrom.

5. The beverage preparation device (1) according to any one of claims 1 to 4, having a combined parallel and series connection of at least three jet pumps (35, 45).

6. The beverage preparation device (1) according to any one of the preceding claims,
**characterized in that**
at least one of the jet pumps (35, 45) has an additional bore (55).

7. The beverage preparation device (1) according to claim 6,
**characterized in that**
additional fluid is introducible into the jet pump (35, 45) via the additional bore (55).

8. A method for operating a beverage preparation device (1) according to any one of claims 1 to 7, said beverage preparation device (1) having at least two jet pumps (35, 45) which are connected in series and each of which has a drive nozzle (36, 46), the at least two jet pumps (35, 45) being in particular realized as single pumps and connected to each other, said method comprising the following successive steps:
- aspirating a fluid as a result of a vacuum generated by means of a first drive nozzle (36) and heating the fluid by means of steam transported from the first drive nozzle (36) and
- aspirating the heated fluid by means of a vacuum generated by a second drive nozzle (46) and further heating the fluid by means of steam transported from the second drive nozzle (46).

## Revendications

1. Dispositif (1) de préparation de boissons, notamment une machine à café ayant une unité d'infusion (2) pour la lixiviation de café moulu, ayant au moins un moyen (26) pour chauffer un fluide, notamment du lait, avec de la vapeur d'eau, ledit dispositif (1) de préparation de boissons comprenant un moyen de chauffage (5) pour chauffer de l'eau pour former de la vapeur d'eau, le moyen (26) comprenant au moins deux pompes à jet (35, 45) qui sont connectées en série, notamment réalisées comme pompes individuelles et connectées l'une à l'autre, chaque pompe à jet (35, 45) ayant une tuyère de propulsion (36, 46) pour générer un vide, le fluide aspiré par une première tuyère de propulsion (36) de la première pompe à jet (35) par suite d'un vide et chauffé au moyen de vapeur d'eau est, en outre, capable d'être aspiré par une autre tuyère de propulsion (46) de l'autre pompe à jet (45) et d'être chauffé encore plus au moyen de vapeur d'eau, les tuyères de propulsion (36, 46) étant capables d'être alimentées via différentes conduites (15) de vapeur de propulsion ou via une conduite (15) de vapeur de propulsion commune et ramifiée, **caractérisé en ce qu'**au moins une conduite (15) de vapeur de propulsion a un dispositif d'étranglement ou un dispositif de retard qui est/sont conçu(s) de manière qu'il est possible de régler une alimentation individuelle en vapeur d'eau aux tuyères de propulsion (36, 46).

2. Dispositif (1) de préparation de boissons selon la revendication 1,
**caractérisé en ce que**
la première tuyère de propulsion (36) est conçue pour aspirer du lait ou un mélange de lait et d'air à travers une conduite de lait (17), pour chauffer le lait ou le mélange de lait et d'air, de la vapeur d'eau étant capable d'être introduite dans le lait aspiré ou le mélange de lait et d'air à travers une ouverture de sortie (37) de la première tuyère de propulsion (36) pour obtenir le fluide chauffé, et une autre tuyère de propulsion (46) monté en aval de la première tuyère de propulsion (36) étant conçue pour aspirer le fluide chauffé, de la vapeur d'eau étant capable d'être introduite à travers une ouverture de sortie (47) de l'autre tuyère de propulsion (46) pour chauffer le fluide encore plus.

3. Dispositif (1) de préparation de boissons selon la revendication 1,
**caractérisé en ce que**
une première tuyère de propulsion (36) est conçue pour aspirer du lait ou un mélange de lait et d'air à travers une conduite de lait (17), pour chauffer le lait ou le mélange de lait et d'air, de la vapeur d'eau étant capable d'être introduite dans le lait aspiré ou le mélange de lait et d'air à travers une ouverture de sortie (37) de la première tuyère de propulsion (36) pour obtenir le fluide chauffé, et une autre tuyère de propulsion (46) monté en aval de la première tuyère de propulsion (36) étant conçue pour aspirer, en plus du fluide chauffé, en outre, de l'air à travers une conduite d'air (16), de la vapeur d'eau étant capable d'être introduite à travers une ouverture de sortie (47) de la deuxième tuyère de propulsion (46) dans le fluide mélangé avec de l'air pour chauffer le fluide mélangé avec de l'air encore plus.

4. Dispositif (1) de préparation de boissons selon la revendication 1,
**caractérisé en ce que**
une première tuyère de propulsion (36) est conçue pour aspirer de l'air à travers une conduite d'air (16), pour chauffer l'air, de la vapeur d'eau étant capable d'être introduite dans l'air aspiré à travers une ouverture de sortie (37) de la première tuyère de propulsion (36) pour obtenir le fluide chauffé, et une autre tuyère de propulsion (46) monté en aval de la première tuyère de propulsion (36) étant conçue pour aspirer, en plus du fluide chauffé, du lait ou un mélange de lait et d'air à travers une conduite de lait (17), de la vapeur d'eau étant capable d'être introduite dans le fluide résultant à travers une ouverture de sortie (47) de la deuxième tuyère de propulsion (46) pour chauffer le fluide qui en résulte encore plus.

5. Dispositif (1) de préparation de boissons selon l'une quelconque des revendications 1 à 4, ayant un montage en série et en parallèle combinés d'au moins trois pompes à jet (35, 45).

6. Dispositif (1) de préparation de boissons selon l'une quelconque des revendications précédentes,
**caractérisé en ce**
**qu'**au moins une des pompes à jet (35, 45) a un trou (55) additionnel.

7. Dispositif (1) de préparation de boissons selon la revendication 6,
**caractérisé en ce que**
davantage de fluide étant capable d'être introduit dans la pompe à jet (35, 45) via le trou (55) additionnel.

8. Procédé pour le fonctionnement d'un dispositif (1) de préparation de boissons selon l'une quelconque des revendications 1 à 7, ledit dispositif (1) de préparation de boissons ayant au moins deux pompes à jet (35, 45) qui sont connectées en série et dont chacune a une tuyère de propulsion (36, 46), les aux moins deux pompes à jet (35, 45) étant réalisées notamment comme pompes individuelles et connectées l'une à l'autre, ledit procédé comprenant les étapes successives suivantes :
- aspirer un fluide par suite d'un vide généré au moyens d'une première tuyère de propulsion (36) et chauffer le fluide au moyen de vapeur d'eau convoyée à partir de la première tuyère de propulsion (36) et
- aspirer le fluide chauffé au moyen d'un vide généré par une deuxième tuyère de propulsion (46) et chauffer le fluide encore plus au moyen de vapeur d'eau convoyée à partir de la deuxième tuyère de propulsion (46).
